# EUROPÄISCHE PATENTSCHRIFT

(11) **EP 2 786 467 B1**
(45) Veröffentlichungstag und Bekanntmachung des Hinweises auf die Patenterteilung: **01.08.2018**
(21) Anmeldenummer: 12798676.8
(22) Anmeldetag: 29.11.2012
(51) Int. Cl.: H02J 7/00

(54) **VERFAHREN UND VORRICHTUNG ZUM LADEN VON WIEDERAUFLADBAREN ZELLEN**
METHOD AND APPARATUS FOR CHARGING RECHARGEABLE CELLS
PROCÉDÉ ET DISPOSITIF DE CHARGE D'ÉLÉMENTS DE BATTERIES RECHARGEABLES

(30) Priorität: 30.11.2011 DE 102011087496
(43) Veröffentlichungstag der Anmeldung: 08.10.2014
(73) Patentinhaber: H-Tech AG, 9494 Schaan (LI)
(72) Erfinder: HEMPEL, Jörg, 72574 Bad Urach/Wittlingen (DE)
(74) Vertreter: Ter Meer Steinmeister & Partner
(86) Internationale Anmeldenummer: PCT/EP2012/073994
(87) Internationale Veröffentlichungsnummer: WO 2013/079611

(56) Entgegenhaltungen:
- US-A- 5 481 174
- US-A1- 2011 285 356

## Beschreibung

Die Erfindung bezieht sich auf ein Verfahren zum Laden von wiederaufladbaren Zellen, insbesondere von Lithium-Ionen Zellen oder Lithium basierten Zellen. Darüber hinaus bezieht sich die vorliegende Erfindung auf eine Vorrichtung zum Laden derartiger Zellen.

Die Neuausrichtung bei der Gewinnung von elektrischer Energie basierend auf regenerativen Energieträgern, insbesondere mittels Photovoltaik bzw. durch Windkraft, erfordern zunehmend eine effiziente Speicherung der erzeugten Energie, um die elektrische Energie dann bereitstellen zu können, wenn sie benötigt wird.

Darüber hinaus ist eine deutliche Zunahme bei tragbaren bzw. Akku-betriebenen Geräten, insbesondere zur Kommunikation und im Handwerkerbereich, zu verzeichnen, die mit wiederaufladbaren Batterien bzw. Zellen betrieben werden. Bei diesen Geräten stellt die Kapazität der wiederaufladbaren Batterie ein entscheidendes Funktionsmerkmal dar. Die Faktoren, die die Kapazität der wiederaufladbaren Batterie beeinflussen, sind einerseits die geometrische Größe, da eine Erhöhung der Kapazität herkömmlich mit einer Vergrößerung der geometrischen Abmessungen der Zelle bzw. der Batterie erreicht wird. Andererseits spielt die Haltbarkeit bzw. die Anzahl der maximal möglichen Aufladezyklen eine entscheidende Rolle, da bei üblichen Akku-betriebenen Geräten meist die Batterie oder Zelle als erstes ausfällt, d.h. bei der Haltbarkeit der Komponenten derartiger Geräte gehören die wiederaufladbaren Batterien bzw. Zellen zu den kurzlebigsten Komponenten.

Darüber hinaus bildet in dem sich sehr schnell entwickelnden Feld der E-mobility mit Hybrid- oder Elektrofahrzeugen die Kapazität, Haltbarkeit und Ladezeit von wiederaufladbaren Zellen einen besonderen Schwerpunkt. Außerdem spielen auch die geometrischen Abmessungen und das Gewicht von wiederaufladbaren Zellen eine wichtige Rolle.

Unter den wiederaufladbaren Zellen hat sich in letzter Zeit die Lithium-Ionen-Zelle als besonders vorteilhaft herausgestellt, da sie eine lange Lebenszeit aufweist und die Anzahl der Ladezyklen verglichen mit anderen Technologien hoch ist. Lithium-Ionen-Zellen weisen zudem eine hohe Speicherkapazität im Vergleich zu anderen wiederaufladbaren Zellen auf.

Bei Lithium-Ionen-Zellen wird die Zelle je nach Ausgestaltung maximal bis zu 30% ihrer Kapazität entladen. D.h., 30% der eigentlichen in der Zelle gespeicherten Energie stehen dem Endnutzer nicht zur Verfügung, da ein Entladen unter eine Schwelle von 30% zu einer unwiderruflichen Zerstörung der Lithium-Ionen-Zelle führen würde. Bei einer Entladung unter diese Schwelle können Ionen aus dem Elektrodenmaterial (Cu, Al) gelöst werden, wodurch diese Elektrode zerstört wird.

Darüber hinaus wird bei heutigen Lithium-Ionen-Zellen die Zelle auch nur bis 80% ihrer Kapazität geladen, da ein weiteres Aufladen auf 100% der Zelle exponentiell mehr Zeit erfordern würde, da bei Erreichen der Ladeschlussspannung üblicherweise der Strom begrenzt wird, wodurch die letzten 20% der Kapazität mit geringeren Stromstärken geladen werden, so dass pro Zeit weniger Energie gespeichert wird.

Somit wird bei den herkömmlichen Technologien für wiederaufladbare Zellen die eigentliche Kapazität der Zellen nicht ausgenutzt.

US 5,481,174 beschreibt ein Verfahren zum Laden von Lithium-Ionen Zellen, bei dem ein positiver und ein negativer Puls verwendet wird, wobei nach Erreichen einer voreingestellten maximalen Spannung die Höhe der positiven Strompulse reduziert wird, wodurch sich ein langer Ladeprozess ergibt

US 2011/0285356 A1 beschreibt ein Verfahren und Schaltung zur angepassten Ladung einer Batteriezelle.

Ausgehend von dieser Situation ergibt sich die Aufgabe der Erfindung, ein Verfahren zum Laden einer Lithium basierten Zelle, bzw. eine Vorrichtung zum Laden einer Lithium basierten Zelle anzugeben, bei denen die Kapazität der Zelle optimal genutzt wird, die Ladezeit drastisch verkürzt wird, die Haltbarkeit der Zelle verlängert wird und/oder eine Kapazitätserhöhung der Zelle ermöglicht wird.

Die Erfindung basiert auf dem Gedanken eine wiederaufladbare Zelle bzw. Batterie schneller und/oder vollständiger zu laden, als herkömmlich. Dazu ist eine Anladephase vorgesehen, in der die wiederaufladbare Zelle auf eine Pulsladephase vorbereitet oder aktiviert wird. Dabei ist für ein Erreichen der oben genannten Ziele auch nur eine erfindungsgemäße Anladephase erforderlich. Ebenso ist es für das Erreichen der oben genannten Ziele ausreichend, auch nur die Pulsladephase durchzuführen.

Im Folgenden wird zunächst auf die erfindungsgemäße Pulsladephase eingegangen. Während der Pulsladephase wird ein pulsförmiges Ladeverfahren angewendet, bei dem die Zelle mit einem Ladestrom I_{L} geladen wird, der den zugelassenen Nennladestrom I_{Lmax} der Zelle übersteigt. Der pulsförmige Ladestrom I_{L} setzt sich aus positiven Pulsen und negativen Pulsen zusammen. Das pulsförmige Ladeverfahren wird dabei unter Betrachtung des Stroms beschrieben. Der dazugehörige Spannungsverlauf wird mit Bezug auf die Figuren erläutert. Die negativen Pulse stellen eine Belastung der Zelle mit einer definierten Last dar, d.h. die Zelle gibt Energie ab oder es fließt ein Strom mit umgekehrter Richtung. Während die positiven Pulse als Ladepulse bezeichnet werden, können die negativen Pulse dabei als Last- oder Belastungspulse bezeichnet werden. Auch der Begriff Reversepuls ist teilweise üblich.

Durch das Anlegen eines Ladestromes, der höher als der zugelassene Nennladestrom ist, wird die Energie schneller in die Zelle eingespeichert als bei Anwendung des Nennladestroms. Dadurch werden beim Laden mehr Ionen von einer Elektrode zur anderen befördert, die dann bei einer Last wieder zurückwandern. Würde die Einspeicherung von Energie mit einem Ladestrom, der höher als der zugelassene Nennladestrom ist, kontinuierlich über einen längeren Zeitraum durchgeführt, würde sich die Zelle erwärmen und die in der Zelle eingebauten Sicherheitsmechanismen (PTC, Schmelzsicherung, Entgasungsventil, Balancer) würden einen derartigen Ladevorgang unterbrechen. Durch das kontinuierliche Laden werden an den Elektroden anhaltend Dendriten aufgebaut, die einerseits den Innenwiderstand der Zelle erhöhen, wodurch die Spannung an der Zelle ansteigt. Andererseits wird durch die steigende Anzahl von Dendriten auch die Anzahl der möglichen Ladezyklen reduziert. Erfindungsgemäß wird nun aber vorgeschlagen, einem Ladepuls einen Lastpuls folgen zu lassen. Während dieses Lastpulses fließt der Strom in der Zelle in die andere Richtung, da die Zelle wieder Energie abgibt. Somit wird die während des Ladepulses aufgebaute Remanenz während des folgenden Lastpulses abgebaut. Durch den Lastpuls werden Dendriten bzw. Kristalle, die sich während des Ladepulses aufbauen, wieder abgebaut. Die Kristalle oder Dendriten können dazu führen, dass der Separator in der Zelle zwischen Kathode und Anode durchstochen wird, was schlimmstenfalls zu einem Kurzschluss führen würde. Durch den Lastpuls werden die aufgebauten Kristalle immer wieder abgebaut. Deshalb kann die Zelle im nächsten Ladepuls mit einem höheren Ladestrom als dem zugelassenen Nennladestrom geladen werden, ohne dass sie sich erwärmt. Durch den höheren Ladestrom während des positiven Pulses wird mehr Energie in die Zelle eingespeichert, als bei herkömmlichen Ladeverfahren. Durch den folgenden Lastpuls wird der anhaltenden Bildung von Dendriten entgegengewirkt, sodass die Zelle weiter mit einem höheren Ladestrom geladen werden kann. Dabei ist die Höhe des Lastpulses geringer als beim Ladepuls bzw. ist die absolute Stromstärke während des Lastpulses kleiner. Es erfolgt somit eine Art Freispülen der Kanäle im Separator zum Ionenaustausch, wobei jedoch durch den höheren Ladestrom immer mehr Energie in der Zelle verbleibt.

Durch die erfindungsgemäßen kurzen hohen Ladeströme und darauf folgende Lastpulse erfolgt somit eine Formatierung des Separators. Dies verhindert einerseits eine ungleiche Verteilung oder Ablagerung des Lithiums an einer der Elektroden. Darüber hinaus wird durch die kurzen Ladepulse und Lastpulse verhindert, dass sich die Temperatur der Zelle erhöht. Da die Pulse in beide Stromrichtungen kurz sind, kann sich die Temperatur an den Elektroden nicht erhöhen. Zudem kann sich eine eventuelle Erhöhung der Temperatur an den Elektroden in der Zeit zwischen den Pulsen wieder abbauen. Eine Erhöhung der Temperatur würde eine ungleiche Widerstandsverteilung in den Elektroden nach sich ziehen, wodurch letztlich das Lithium ungleich an den Elektroden abgelagert würde.

Bei einer Zelle sind die Anschlussfahnen üblicherweise diagonal zueinander angeordnet. D.h., die Leitungswiderstände in den Elektroden sind verschieden, insbesondere in einer gewickelten Zelle. Bei langen und kleinen Ladeströmen, u.a auch bei langsam gepulsten Ladeströmen, würden die Lithium-Ionen versuchen in Richtung des geringsten Widerstands zu wandern. D.h sie würden versuchen, nicht den kürzesten Weg zur gegenüberliegenden Elektrode zu nehmen, sondern innerhalb der Zelle direkt zur gegenpoligen Anschlussfahne zu wandern. Dies würde aber dazu führen, dass sich das Lithium an den Elektroden ungleich ablagern würde. Eine ungleiche Ablagerung des Lithiums an den Elektroden führt aber zu einer Reduzierung der Lebenszeit und zu einer Reduzierung der Kapazität der Zelle, da nicht mehr die gesamte Elektrodenfläche für die chemische Reaktion zur Verfügung steht.

Durch die kurzen Ladepulse mit erhöhtem Ladestrom und auch durch die Lastpulse haben die Ionen jedoch keine Zeit sich den Weg des geringsten Widerstands zu suchen und müssen den kürzesten Weg zwischen den Elektroden wählen, wodurch die gesamte Elektrodenlänge für den Ionenaustausch zur Verfügung steht und eine Ablagerung des Lithiums zwischen den Elektroden gleich verteilt bleibt.

Vorzugsweise beträgt der Ladestrom während der Ladepulse mehr als das 1,5-fache des Nennladestroms der Zelle, bspw. das 2-fache des Nennladestroms oder größer. Ladeströme, die den Nennladestrom um das 5-fache übersteigen sind möglich. Der während der Pulsladephase zugeführte Ladestrom bzw. Entladestrom wird nur durch einen PTC in beide Stromflussrichtungen begrenzt, dessen Leitfähigkeit von der Temperatur abhängig ist. Je nach Ausgestaltung der Zelle ist der PTC so ausgelegt, dass er dem 5 oder 10-fachen des Nennladestroms entspricht. Der PTC würde den Stromfluss unterbrechen, wenn ein stärkerer Strom fließen würde.

Nach einer gewissen Ladezeit und entsprechend vielen Ladepulsen überstiegt die Spannung Uz an der Zelle während der Ladepulse die Ladeschlussspannung U_{Lmax}. Bei herkömmlichen Zellen würde jetzt der Strom begrenzt werden, wie es beispielsweise bei der US 5,481,174 vorgenommen wird. Erfindungsgemäß wird jedoch bei Erreichen der Ladeschlussspannung U_{Lmax} der Ladestrom nicht begrenzt. Das heißt, die Spannung an der Zelle steigt weiter auch über die Ladeschlussspannung U_{Lmax} hinaus und die Höhe des Ladestroms wird während der Ladepulse beibehalten. Bei herkömmlichen Ladeverfahren wird der Strom bei Erreichen von ca. 80% der Kapazität der Zelle begrenzt, da dann die maximale Ladeschlussspannung U_{Lmax} bereits erreicht ist. Ein Erhöhen der Spannung über die maximale Ladeschlussspannung U_{Lmax} hinaus wird durch die kurzen und hohen Ladepulse und durch die Lastpulse ermöglicht, da insbesondere durch die kurzen starken Pulse die Temperatur der Zelle nicht erhöht wird und somit einer Ungleichverteilung der Widerstände der Elektroden bzw. einer Ungleichverteilung der Lithiumablagerung an den Elektroden entgegengewirkt wird.

Vorzugsweise wird die Zelle zwischen zwei positiven Ladepulsen mittels eines Lastpulses entladen. Wie bereits oben beschrieben, werden dadurch die gebildeten Dendriten abgebaut. Es sind aber auch andere Lademuster möglich, bei denen zwischen zwei Ladepulsen nur eine Pause erfolgt und erst nach zwei oder mehreren Ladepulsen wieder ein Lastpuls erfolgt. Dies hat jedoch einen Einfluss auf die Ladezeit, da dann der Ladestrom während der Ladepulse nicht so groß gewählt werden kann, als wenn zwischen allen Ladepulsen ein Lastpuls folgen würde.

In einem bevorzugten Ausführungsbeispiel ist die Höhe der Ladepulse und/oder die Höhe der Lastpulse abhängig vom Zustand der Zelle, insbesondere vom Innenwiderstand der Zelle. D.h. mit steigendem Ladezustand kann die Höhe des Lastpulses steigen, um Remanenz abzubauen. Durch die adaptive Ausgestaltung der Höhe der Ladepulse bzw. der Lastpulse ist es möglich, auf Besonderheiten während des Ladevorgangs zu reagieren, bspw. auf externe Temperatureinwirkungen. Ebenso können Abweichungen von den Spannungstrends während der Ladepulse und/oder Lastpulse auftreten, die auf eine ungleiche Ablagerung des Lithiums hindeuten oder auch auf eine kurzzeitige Erwärmung der Elektroden zurückzuführen sind.

Um den Zustand der Zelle festzustellen, wird vorzugsweise während wenigstens eines Lastpulses und/oder Ladepulses eine Spannungsmessung an der Zelle vorgenommen. Da eine Spannungsmessung an der Zelle nur unter Last eine realistische Aussage über den Zustand der Zelle ermöglicht, wird die Spannung während der Lastpulse gemessen werden. Besonders vorteilhaft ist es hier, wenn die Spannung am Ende des Lastpuls gemessen wird, da dann der stabilste Zustand der Zelle erreicht ist. D.h. die Spannung wird zu dem Zeitpunkt gemessen, bevor der Lastpuls sein Maximum verlässt und der Strom in Richtung 0 verläuft. Eine Spannungsmessung ohne Last kann Spannungswerte ergeben, die im Lastzustand nicht mehr erreicht werden können, da dann die Spannung extrem ansteigt und der Strom zusammenbricht. Zur besseren Steuerung der Ladepulse und/oder Lastpulse und insbesondere der Höhe bzw. der Dauer der Pulse ist es vorteilhaft, die Spannung der Zelle auch während des Ladepulses zu messen, insbesondere um Spannungsabweichungen nach oben zu erkennen.

Vorzugsweise fließt während eines Lastpulses ein Entladestrom von maximal 20 - 25 % des Ladestroms. Dadurch wird erreicht, dass während des Lastpulses nicht mehr Energie aus der Zelle entnommen wird, als während des Ladepulses eingespeichert wird.

Die Höhe des Ladestroms in aufeinanderfolgenden Ladepulsen kann verschieden sein, d.h. sie ist jeweils an den Zustand der Zelle angepasst, wobei hier zur Zustandserfassung bspw. die Spannungsmessung und/oder eine Temperaturmessung verwendet werden können.

Auch die Höhe bzw. Größe des Entladestroms in aufeinanderfolgenden Lastpulsen kann verschieden sein.

Wenn die Spannungsmessung während des Ladepulses einen Spannungsanstieg anzeigt, deutet dies auf eine Unregelmäßigkeit beim Laden hin, die beispielsweise auf einen verstärkten Dendritenaufbau hindeutet, wodurch der Innenwiderstand der Zelle steigt. Um diesem Spannungsanstieg entgegenzuwirken, kann die Höhe des nächstfolgenden Ladepulses im Vergleich zum vorherigen Ladepuls reduziert werden. D.h wenn die Spannung an der Zelle abrupt steigt, wird der Strom im nächsten Ladepuls reduziert. Vorzugsweise wird eine Reduktion um ca. 50% vorgenommen, so dass bei einem 2-fachen Ladestrom im vorherigen Ladepuls nun für einen Ladepuls nur mit dem einfachen Nennladestrom geladen wird.

Vorzugsweise kann auch der auf den reduzierten Ladepuls folgende Lastpuls um 50% im Vergleich zu dem vorherigen Lastpuls reduziert sein. An der während des Lastpulses gemessenen Spannung lässt sich nun ableiten, ob der nächstfolgende positive Ladepuls auch wieder reduziert werden muss oder wieder mit erhöhtem Ladestrom durchgeführt wird. Wenn die Spannung während des Lastpulses mit reduzierter Last wieder im vorgegebenen Toleranzbereich liegt, kann der nächstfolgende positive Ladepuls wieder mit dem erhöhtem Ladestrom durchgeführt werden. Dann kann auch der nächstfolgende Lastpuls wieder mit der zuvor angewendeten Last vorgenommen werden, um die Zelle kurzzeitig zu entladen und für den nächsten positiven Ladepuls mit erhöhtem Ladestrom vorzubereiten.

Die Spannung der Zelle kann bspw. wegen eines defekten PTCs ansteigen oder wenn der Innenwiderstand der Zelle zu hoch wird, da die Elektroden zu heiß geworden sind. Dann werden vorzugsweise sowohl die Ladepulse als auch die Lastpulse reduziert, bis sich die Spannung der Zelle wieder in den vorgegebenen Spannungstrends befindet.

In einem bevorzugten Ausführungsbeispiel wird in allen Entladenpulsen eine Spannungsmessung vorgenommen.

Vorzugsweise entspricht die Länge des Lastpulses ca. ½ der Länge eines Ladepulses. Dadurch wird sichergestellt, dass während der Ladepulse nicht nur ein höherer Strom zugeführt als während des Lastpulses entnommen wird, sondern auch, dass während des Ladepulses der höhere Strom länger zugeführt wird, als während des Lastpulses, bei dem der Zelle Energie entnommen wird. Allerdings sind auch Verhältnisse von 2/3 für Ladepuls und 1/3 für den Lastpuls möglich. Der Lastpuls darf dabei nicht zu lang gewählt werden, da ansonsten das Aufladen der Zelle unnötig verlängert wird. In einem bevorzugten Ausführungsbeispiel lassen sich die Zeiten der Pulse bzw. deren Verhältnis zueinander einstellen.

In einem weiteren bevorzugten Ausführungsbeispiel wird das Aufladen der Zelle beendet, nachdem bei einer vordefinierten Anzahl von Lastpulsen die gemessene Spannung der Ladeschlussspannung der Zelle entspricht.

Besonders vorteilhaft ist es, wenn die letzten Lastpulse vor Erreichen einer 100% Ladung der Zelle ca. 25% größer sind als die vorherigen Lastpulse, da mit steigender Spannung die Remanenz der Zelle höher wird, die dann mit einem größeren Lastpuls abgebaut werden muss.

Zusätzlich oder alternativ wird der Strom vom nächsten Ladepuls verkleinert, wenn die Spannung während des Lastpuls die Ladeschlussspannung erreicht. Vorzugsweise wird der nächste Ladepuls halbiert, und zwar so lange, bis bei den nächsten Lastpulsen die Ladeschlussspannung stabil bleibt. Dann ist die Zelle nahezu zu 100% geladen.

Bei allen Verfahrensschritten ist es vorteilhaft, die Temperatur der Zelle kontinuierlich oder periodisch zu messen. Dadurch erhält man eine weitere Information, ob sich die zu ladende Zelle während des Aufladens normal verhält. Solange wie die Temperatur unterhalb vorbestimmter Grenzwerte liegt, wird das Ladeverfahren fortgeführt. Einem Temperaturanstieg unterhalb von vorbestimmten Grenzwerten kann durch Reduzierung der Ladepulse und/oder Lastpulse entgegengewirkt werden. Die Temperatur sollte zumindest während des Ladepulses bzw. des Lastpulses überwacht werden. Bei Überschreiten einer vorbestimmten Temperatur (Tₘₐₓ) für eine vorbestimmte Zeit, bspw. 45°C für einen oder mehrere Ladepulse wird der Ladevorgang der Zelle abgebrochen. Die kritische Temperatur liegt für Hochenergiezellen als auch für Hochstromzellen bei 47-48°.

Zusätzlich oder alternativ kann während des Ladens die Spannung der Zelle kontinuierlich oder periodisch gemessen werden, um weitere Informationen über den Zustand der Zelle zu erhalten, wobei bei Überschreiten einer vorbestimmten Spannung der Zelle der Ladevorgang abgebrochen oder unterbrochen wird. Sollte die Spannung an der Zelle über die vorbestimmte Spannung der Zelle ansteigen, weist die Zelle eine Unregelmäßigkeit auf, die während des Weiterladens berücksichtigt werden muss.

Entweder durch Anpassen der Ladestromhöhe bzw. Laststromhöhe oder im Extremfall durch Abbrechen des Ladeverfahrens oder durch Unterbrechen zur Abkühlung der Zelle.

Bisher wurde das Ladeverfahren nur in Bezug auf die Pulsladephase beschrieben. Durch die oben beschriebene Pulsladephase lässt sich einerseits eine enorme Zeitersparnis beim Laden einer Zelle erreichen. Darüber hinaus lässt sich die Zelle auch innerhalb kurzer Zeit bis auf 100% ihrer Kapazität aufladen, da bei Erreichen der maximalen Ladeschlussspannung der Ladestrom nicht reduziert wird und auch bei Überschreiten der maximalen Ladeschlussspannung die Größe des Ladestroms während der Ladepulse beibehalten wird. So ist es mit dem erfindungsgemäßen Ladeverfahren möglich, innerhalb von 20% der üblichen Ladezeit 100% der Kapazität der Zelle zu laden, ohne dass sich die Zelle erwärmt oder dauerhaften Schaden nimmt. Der kurze Wechsel zwischen hohen Ladepulsen und Lastpulsen verhindert ein Ansteigen der Temperatur der Zelle, so dass auch die Widerstände der Elektroden gleich bleiben und somit einer ungleichen Verteilung des Lithiums entgegengewirkt wird.

Die im Folgenden beschriebene Anladephase dient der Aktivierung der Zelle. Sie ist insbesondere dafür wichtig, tief entladene Zellen langsam auf das Pulsladeverfahren vorzubereiten. Aber auch eine Anwendung der Anladephase allein führt zu Verbesserungen beim Laden von Li-Zellen.

Batterien sind meist aus mehreren Zellen zusammengesetzt, die parallel oder in Reihe geschaltet sind. In derartigen Batterien oder Akkupacks ist ein Balancer vorgesehen, der normalerweise ein Tiefentladen der Zellen verhindert. Bei herkömmlichen Zellen wird eine Zelle als "entladen" bezeichnet, wenn sie noch 30% ihrer Kapazität aufweist. Wenn Zellen tiefer entladen werden als 30%, spricht man von einer Tiefentladung. Dies kann einerseits durch einen defekten Balancer eintreten oder auch, wenn die Zellen bei extrem tiefen Temperaturen belastet werden oder im entladenen Zustand bei tiefen Temperaturen gelagert werden

Die Anladephase wird dabei vor der Pulsladephase durchgeführt. Zur Anladephase gehört u.a. eine erste Messung der Spannung der Zelle ohne Last, d.h. eine Messung ohne vorher Strom zuzuführen. Wenn die Zelle dabei keine Spannung zeigt, ist von einer defekten Zelle auszugehen. In Abhängigkeit der gemessenen Spannung wird nun eine Ladestromhöhe eingestellt. Die Ladestromhöhe während der Anladephase ist für eine erste Anstiegsphase auf die maximale Nennladestromhöhe begrenzt. Weiter wird die Steigung bzw. die Zeit eingestellt, in der der Ladestrom von Null oder einem niedrigen Anfangswert bis auf die festgelegte Ladestromhöhe ansteigen soll. Zeigt die Spannungsmessung eine sehr niedrige Spannung, sollte beispielsweise 50% des Nennladestroms während der ersten Anstiegsphase angewendet werden. Je geringer die Spannung je länger sollte auch die Zeit für die erste Anstiegsphase dauern, d.h. der Anstieg des Ladestroms ist bei einer niedrigen Spannung auch geringer.

Danach erfolgt ein Laden der Zelle mit dem festgelegten Ladestrom innerhalb einer ersten linearen Anstiegsphase bis auf die eingestellte Ladestromhöhe, z.b. 1A über die vordefinierte Zeit, z.B. 1min, wobei der Ladestrom maximal dem Nennladestrom der Zelle entspricht. Diese Aufladung dient der Aktivierung der Zelle, so dass die Ionen langsam anfangen, von einer Elektrode zur anderen zu wandern.

Nach Erreichen der eingestellten Ladestromhöhe erfolgt eine Pause ohne Ladestromzufuhr. Auch hier kann bereits die Spannung der Zelle gemessen werden. Dann wird die Spannung der Zelle bei einer vordefinierten Last gemessen. Die vordefinierte Last ist dabei ähnlich oder gleich wie ein Lastpuls in der Pulsladephase. Zusätzlich kann vor und/oder nach dem Lastpuls zur Spannungsmessung auch eine Pause ohne Stromzufuhr zwischengeschaltet werden.

In Abhängigkeit der unter Last gemessenen Spannung der Zelle wird die erste Anstiegsphase wiederholt. Eine Wiederholung ist dann wichtig, wenn die Spannung unter Last noch nicht den gewünschten Wert aufweist. Beispielsweise wird die erste Anstiegsphase wiederholt, wenn die Entladeschlussspannung der Zelle nach der ersten Anstiegsphase noch nicht erreicht wird. Diese erste Anstiegsphase mit einem Ladestrom, der maximal dem Nennladestrom entspricht, kann abhängig vom Zelltyp und vom Zustand der Zelle auch mehrmals wiederholt werden.

Nachdem die Zelle unter Last eine Spannung aufweist, die mehr als 5% über der Entladeschlussspannung liegt, kann vorzugsweise eine zweite Anstiegsphase erfolgen, bei der die Zelle linear ansteigend bis auf einen vordefinierten Ladestrom geladen wird, der höher als der Nennladestrom ist. Beispielsweise kann die Zelle während der zweiten Anstiegsphase bis auf den doppelten Nennladestrom geladen werden. Auch nach Abschluss dieser zweiten Anstiegsphase wird die Spannung der Zelle unter Last gemessen. Wenn jetzt eine Spannung erreicht wird, die einen vordefinierten Wert aufweist, bei dem die Zelle zur Pulsladephase geeignet ist, wird die Anladephase beendet. Wenn die Entladeschlussspannung bereits nach der einer oder mehreren ersten Anstiegsphasen erreicht wird, kann die zweite Anstiegsphase auch ausgelassen werden.

Die Aufgabe wird auch durch eine Vorrichtung zum Laden einer Zelle gelöst, wobei die Vorrichtung einen Controller aufweist, der eingerichtet ist, das oben beschriebene Verfahren auszuführen.

Im Folgenden werden Beispiele der Erfindung anhand von Figuren beschrieben.
Fig. 1 zeigt einen Aufbau einer üblichen Lithium-Ionen-Zelle.
Fig. 2 zeigt eine Lithium-Ionen-Zelle im aufgewickelten Zustand;
Fig. 3 zeigt einen Stromsignalverlauf eines erfindungsgemäßen Ladeverfahrens für eine Hochenergiezelle;
Fig. 4 zeigt einen Stromverlauf eines erfindungsgemäßen Ladeverfahrens für eine Hochstromzelle;
Fig. 5 zeigt einen Strom-, Spannungs- und Temperaturverlauf eines weiteren Ausführungsbeispiels des erfindungsgemäßen Ladeverfahrens;
Fig. 6 zeigt einen Strom-, Spannungs- und Temperaturverlauf eines weiteren Ausführungsbeispiels des erfindungsgemäßen Ladeverfahrens;
Fig. 7 zeigt einen Ausschnitt des Strom-, Spannungs- und Temperaturverlaufs gemäß Figur 5;
Fig. 8a, 8b zeigen ein Flußablaufdiagramm für ein erfindungsgemäßes Ladeverfahren;
Fig. 9 zeigt ein Ausführungsbeispiel eines Signalverlaufs während der Anladephase gemäß eines anderen Ausführungsbeispiels.
Fig. 10 zeigt einen schematischen Aufbau eines Ladegeräts zur Anwendung des erfindungsgemäßen Ladeverfahrens.

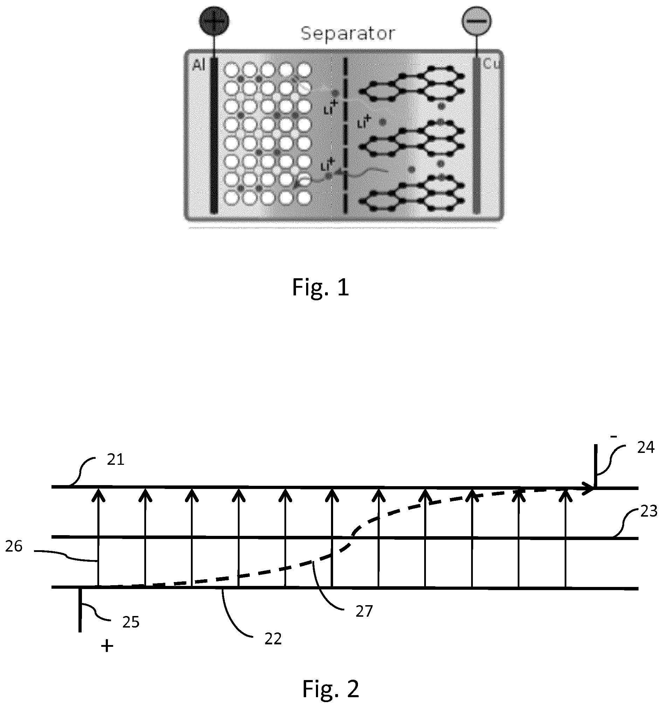

In Fig. 1 ist der schematische Aufbau einer Lithium-Ionen-Zelle gezeigt, die eine Kathode und eine Anode aufweist. Während des Ladevorgangs wandern Lithium-Ionen von der positiven Elektrode zur negativen Elektrode, die beispielsweise mit Lithiumgraphit beschichtet ist. Während des Endladevorgangs wandern die Lithium-Ionen wieder von der negativen Elektrode zurück zur positiven Elektrode. Die beiden Elektroden sind dabei durch einen Separator voneinander getrennt, wobei die Lithium-Ionen durch diesen Separator hindurch wandern.

Lithium-Ionen-Zellen zeichnen sich im Vergleich zu anderen wiederaufladbaren Zellen dadurch aus, dass sie keinen Memory-Effekt aufweisen und die Selbstentladung sehr gering ist. Die übliche Ladeschlussspannung von Lithium-Ionen-Zellen liegt bei 4,2V, wobei von einer Nennspannung von 3,6V ausgegangen wird. Zu den Lithium-Zellen gehören z.B. Lithium Polymer-Zellen, Lithium-Eisensulfat-Zellen, Lithium-Graphit-Zellen und Lithium-Kobalt-Zellen.

Fig. 2 zeigt eine Lithium-Ionen-Zelle im aufgewickelten Zustand. Die Anode 21 und die Kathode 22 liegen sich gegenüber und sind durch einen Separator 23 voneinander getrennt. Die Anschlussfahnen 24 und 25 an den Elektroden 21 und 22 liegen sich diagonal gegenüber. Das heißt, der elektrische Widerstand in den Elektroden nimmt mit Zunahme der Leitungslänge zu. Somit ist der elektrische Widerstand in den Elektroden mit zunehmendem Abstand zur Anschlussfahne größer. Folglich sind die Lithium-Ionen bemüht, auf ihrem Weg von der positiven zur negativen Elektrode den Weg des geringsten elektrischen Widerstands zu nehmen, der jedoch nicht durch die unmittelbar gegenüberliegende Elektrode gebildet wird, sondern sich durch die Zelle hindurch zwischen den Elektroden befindet (mit 27 angedeutet). Aufgrund der kurzen Ladepulse mit einem Ladestrom I_{L}, der höher als der Nennladestrom I_{Lmax} einer Zelle ist, werden somit die Lithium-Ionen zur anderen Elektrode getrieben, ohne dass sie Zeit haben, sich den Weg des geringsten elektrischen Widerstands zu suchen. Folglich wird der Separator 23 formiert und ermöglicht somit einen gleichmäßigen Ionenaustausch zwischen den zwei sich gegenüberliegenden Elektroden 21 und 22. Durch die zeitliche Begrenzung des Ladepulses als auch des Lastpulses wird darüber hinaus verhindert, dass sich die Temperatur der Elektroden 21, 22 erhöht, wodurch sich der Innenwiderstand der Elektroden erhöhen würde, was ebenso zu einer ungleichen Widerstandsverteilung führen würde, wodurch einerseits die Temperatur der Elektroden weiter ansteigen würde und andererseits sich die Lithiumverteilung innerhalb der Zelle verändern würde und eine Ungleichverteilung der Ablagerung von Lithium entstehen würde. Eine ungleiche Ablagerung von Lithium hätte zur Folge, dass einerseits nicht mehr die vollständige chemische Reaktionsfläche zwischen den Elektroden zur Verfügung steht, wodurch die maximal möglichen Ladezyklen reduziert werden. Andererseits würde durch ein ungleichmäßiges Aufwachsen der Lithiumablagerung auf einer der Elektroden irgendwann der Separator erreicht und durchstoßen werden, so dass es zu einem elektrischen Kurzschluss kommen würde. Aufgrund der kurzen Ladepulse bzw. Lastpulse wird dem entgegen gewirkt, wobei die Verhinderung des Temperaturanstiegs besonders wichtig ist. Mit dem Bezugszeichen 27 ist ein Weg der Lithium-Ionen gezeigt, welche versuchen den Weg des geringsten elektrischen Widerstands zu nehmen. Würde die Zelle nicht mit den kurzen hohen Ladepulsen bzw. Lastpulsen geladen bzw. entladen werden, würden die Lithium-Ionen versuchen, den mit dem Bezugszeichen 27 dargestellten Weg zu nehmen, was zu einer Ungleichverteilung der Lithiumablagerung an den Elektroden führen würde.

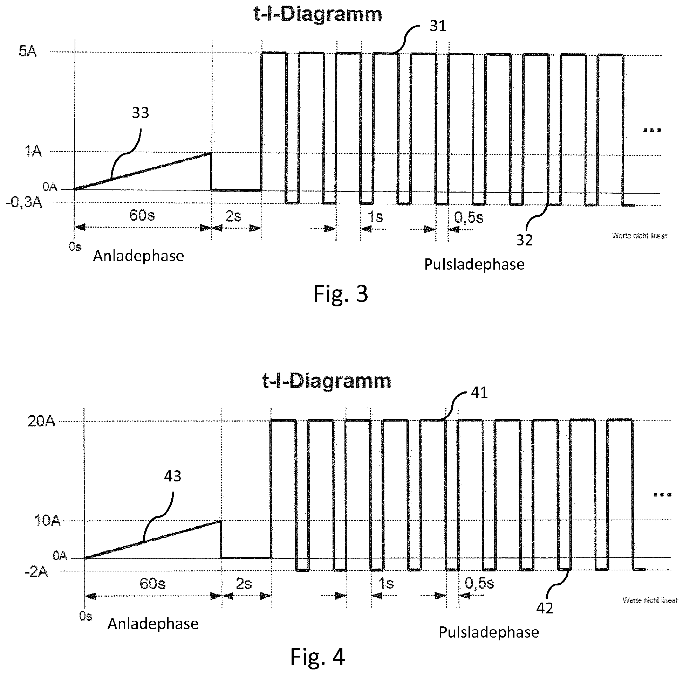

Fig. 3 zeigt einen Signalverlauf des Ladestroms über der Zeit für ein erfindungsgemäßes Ladeverfahren mit einer Anladephase und einer Pulsladephase. Das Ladeverfahren ist hier für eine Hochenergiezelle mit einer Kapazität von 2,3 Ah exemplarisch dargestellt.

Bei diesem Ladeverfahren wird die Zelle während der Anladephase mit einer ersten Anstiegsphase 33 mit einem von 0 auf 1A ansteigenden Ladestrom innerhalb von einer Minute geladen. Nach dieser einen Minute wird der Ladevorgang für eine Dauer für 2s angehalten, d.h. der Zelle wird kein Ladestrom mehr zugeführt, wobei dann die Spannung der Zelle zuerst ohne und danach mit einer vorbestimmten Last gemessen wird. Nach Ablauf der zwei Sekunden und einer gemessenen Spannung oberhalb der Entladespannung von 3,0V, wird die Anladephase beendet und zum Pulsladeverfahren übergegangen.

In der Pulsladephase beträgt die Pulsdauer der positiven Ladepulse 31 anfänglich 1s, wobei die Dauer der Lastpulse 32 0,5s beträgt. Während der Lastpulse 32 wird die Zelle mit 300 mA belastet, wobei innerhalb eines Lastpulses 32 die Spannung Uz der Zelle gemessen wird. Beträgt die Spannung während dieser Belastung mehr als 4,2V ist der Ladevorgang abgeschlossen.

Innerhalb der Zelle passiert während des erfindungsgemäßen Ladevorgangs folgendes: Die im Inneren der Zelle während der Ladepulse 31 entstehenden Kristalle beschädigen den Separator 23 der Zelle, wodurch diese an Ladung und Kapazität verlieren würde. Darüber hinaus behindern die Kristalle die Ionenbewegung zwischen den Elektroden 21, 22, wodurch die Lebensdauer der Zelle deutlich reduziert werden würde. Da jedoch in den erfindungsgemäßen Lastpulsen 32, die zwischen den Ladepulsen 31 liegen, diese Kristalle durch die Belastung sofort wieder abgebaut werden, wird die negative Wirkung der Kristalle aufgehoben. Dadurch wird ein wesentlicher Vorteil des erfindungsgemäßen Ladeverfahrens erreicht. Gemäß dem erfindungsgemäßen Ladeverfahren gemäß Fig. 3 wird während der Pulsladephase mit einem Ladepuls 31 von 5A gearbeitet, der ca. 2x größer sein kann als der Nennladestrom 2,3A für die Hochenergiezelle ist.

Neben den erhöhten Stromwerten während der Ladepulse 31 wird beim erfindungsgemäßen Ladeverfahren auch eine höhere Spannung angewendet bzw. zugelassen, als die vorgegebene Ladeschlussspannung U_{Lmax}, die für die jeweilige Zelle definiert ist und im vorliegenden Fall für die Hochenergiezelle mit 4,2V angegeben ist. Dadurch kann der hohe Strom bis zum letzten Ladepuls 31 aufrecht erhalten werden, was im Vergleich zum herkömmlichen Ladeverfahren ermöglicht, dass die Zelle in sehr kurzer Zeit auf 100% oder mehr geladen werden kann.

Bei anderen herkömmlichen Ladeverfahren wird mit einem konstanten Ladestrom gearbeitet, der jedoch bei Erreichen der Ladeschlussspannung U_{Lmax} abgesenkt wird. Durch den sinkenden Strom bei Erreichen der Ladeschlussspannung U_{Lmax} ist insbesondere für die restlichen 20% der Kapazität einer Zelle eine deutlich erhöhte Ladezeit erforderlich. Bei den traditionellen Ladeverfahren wird darüber hinaus während der Unterbrechung der Ladepulse die Spannung gemessen. Da somit keine Lastpulse angewendet werden, werden die während des Ladens gebildeten Kristalle bzw. Dendriten, die den Separator 23 beschädigen, nicht abgebaut. Dadurch, dass diese Kristalle nicht wieder abgebaut werden, darf bei einem üblichen Ladeverfahren nie mit einem gleichbleibenden erhöhten Strom und einer Spannung geladen werden, die über der Ladeschlussspannung U_{Lmax} liegt.

Es gibt auch Ladeverfahren, die mit einem kontinuierlich ansteigenden Strom laden, wobei jedoch ein kontinuierlich ansteigender Ladestrom I_{L} eine Degenerierung der Zelle nach sich zieht, insbesondere wenn die Zelle auf 100% geladen werden soll. Außerdem ist dabei ein erheblicher Temperaturanstieg zu beobachten.

Durch das erfindungsgemäße Ladeverfahren, bei dem eine definierte Senke während des Lastpulses 32 eingesetzt wird, um die Kristalle bzw. Dendriten abzubauen und dem Temperaturanstieg entgegenzuwirken, ist es möglich, selbst bei Erreichen der Ladeschlussspannung U_{Lmax} den Ladestrom I_{L} während der Ladepulse 31 aufrecht zu erhalten und die Zelle auch mit gleichbleibendem Ladestrom I_{L} und einer über der Ladeschlussspannung U_{Lmax} liegenden Spannung zu laden. Durch die andauernd während der Lastpulse abgebauten Kristalle bzw. Dendriten kann mit einer höheren Spannung und gleichbleibenden Strompulsen gearbeitet werden, wodurch sich eine drastische Reduzierung der Ladezeit ergibt. Durch die kurzen Pulse wird eine Temperatursteigerung vermieden und somit die Zelle sehr schonend geladen, so dass auch durch die höheren Spannungs- und Stromwerte keine Einbuße bei der Lebensdauer der Zelle entsteht.

Darüber hinaus ist die Selbstentladung aufgrund der nicht vorhandenen Kristalle nahezu nicht existent, wodurch sich eine auf 100% geladene Zelle im Ruhezustand oder im abgekoppelten Zustand nicht entlädt und somit nicht degeneriert und auch nach Jahren der Lagerung eine volle Kapazität entfalten kann.

Der Signalverlauf gemäß Fig. 3 bezieht sich auf eine Hochenergiezelle mit einer Kapazität von 2,3Ah, einer Ladeschlussspannung U_{Lmax} von 4,2V, einer Nominalspannung von 3,7V, einer Entladeschlussspannung U_{EL} von 3,0V, einem Nennladestrom I_{Lmax} von 2,3A und einem maximalen Entladestrom von 4,2A und einem Dauerentladestrom von 3,5A.

In Fig. 4 wird ein erfindungsgemäßes Ladeverfahren für eine Hochstromzelle dargestellt, die eine Kapazität von 2,3Ah aufweist. Die weiteren Kenndaten der Hochstromzelle sind eine Ladeschlussspannung U_{Lmax} von 4,1V, eine Nominalspannung von 3,3V, eine Entladeschlussspannung U_{EL} von 2,0V, ein Nennladestrom I_{Lmax} von 10A, ein Entladestrom von max. 50A und ein Dauerentladestrom von 25A.

Im Unterschied zu dem Ladeverfahren gemäß Fig. 3 wird bei einer Hochstromzelle mit einem absolut gesehenen deutlich höheren Strom von 20A während der Ladepulse 41 in der Pulsladephase geladen. Auch die Lastpulse 42 zwischen den Ladepulsen 41 sind absolut gesehen deutlich größer (2A).

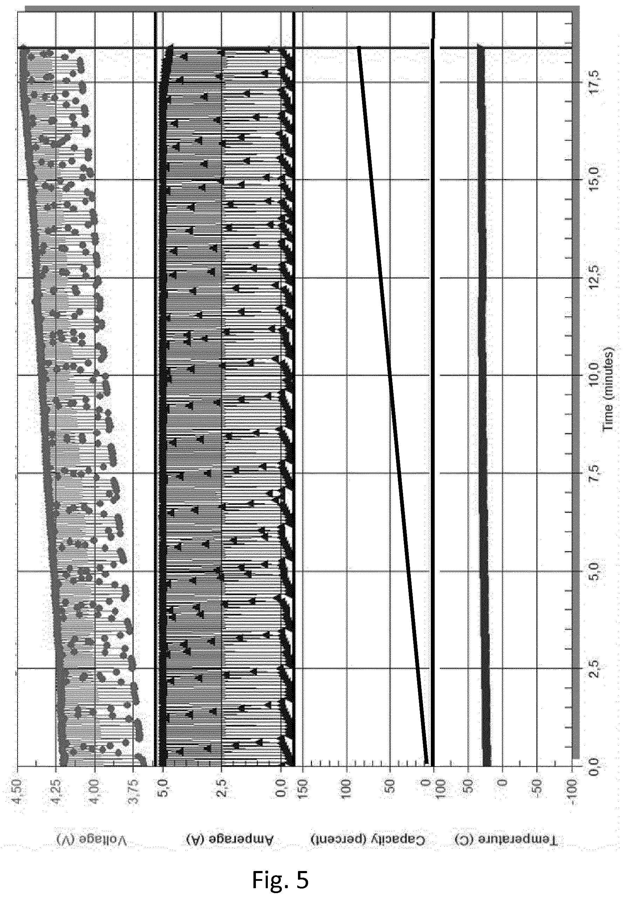

Fig. 5 zeigt einen Signalverlauf von Spannung, Strom, Kapazität und Temperatur für ein erfindungsgemäßes Ladeverfahren. Gemäß Fig. 5 wird eine Lithiumzelle in einer Zeit von ca. 18 Minuten vollständig geladen, ohne dass sich die Temperatur der Zelle erhöht. Die Temperatur ist im unteren Bereich der Figur 5 dargestellt und verbleibt von Beginn bis zum Ende des Ladevorgangs in einem Bereich unter 35°C. Der Strom- bzw. Spannungsverlauf zeigt ein Pulsen der Zelle mit Ladepulsen von 5A, wobei jedem Ladepuls ein Lastpuls folgt, der geringer als 1A ist, vorzugsweise wird mit Lastpulsen von maximal 300mA gearbeitet. Im oberen Bereich der Fig. 5 ist die Spannung dargestellt. Zu Beginn des Ladeverfahrens liegt eine Spannung unter 3,7V an der Zelle an, wobei während der ersten Ladepulse die Spannung U_{Z} anfänglich unter 4,2V liegt. Mit Blick auf den Spannungsverlauf über die Gesamtzeit des Ladeverfahrens lässt sich jedoch erkennen, dass die Spannung U_{Z} an der Zelle nach relativ kurzer Zeit, ca. 2,5min, bereits 4,25V erreicht, die über der Ladeschlussspannung U_{Lmax} einer Lithium-Ionen-Zelle liegt.

Bei üblichen Ladeverfahren würde jetzt eine Reduzierung der Stromhöhe während der Ladepulsen erfolgen. Aufgrund des erfindungsgemäßen Ladeverfahrens, bei dem extrem kurze Ladepulse mit Stromstärken über dem Nennladestrom I_{Lmax} angewendet werden, kann die Spannung U_{Z} an der Zelle auch bei Überschreiten der Ladeschlussspannung U_{Lmax} weiter ansteigen, ohne dass die Stromstärke in den Ladepulsen reduziert werden muss. Somit ist es möglich, die Ladezeit der Zelle drastisch zu reduzieren, ohne dass dabei die Temperatur ansteigt bzw. die Zelle in irgendeiner Form degradiert. Bei Erreichen einer Spannung U_{Z} von ca. 4,5V wird mit einer Reduktion des Stroms während der Ladepulse begonnen, da in mehreren aufeinanderfolgenden Lastpulsen eine Spannung U_{Z} von ca. 4,1V gemessen wurde, was ca. der maximalen Ladeschlussspannung U_{Lmax} entspricht.

Weiter ist zu erkennen, dass sowohl die Höhe der Ladepulse als auch die Höhe der Lastpulse abhängig von der gemessenen Spannung U_{Z} an der Zelle variiert. So ist ersichtlich, dass bei einem Ansteigen der Spannung während der Lastpulse die Belastung oder der Laststrom während der Lastpulse sukzessiv reduziert werden, bis die Spannung während des Lastpulses wieder in einem vorgeschriebenem Bereich liegt, der dem unteren Trend der Spannungen folgt. Somit wird verhindert, dass sich die Temperatur an den Elektroden erhöht.

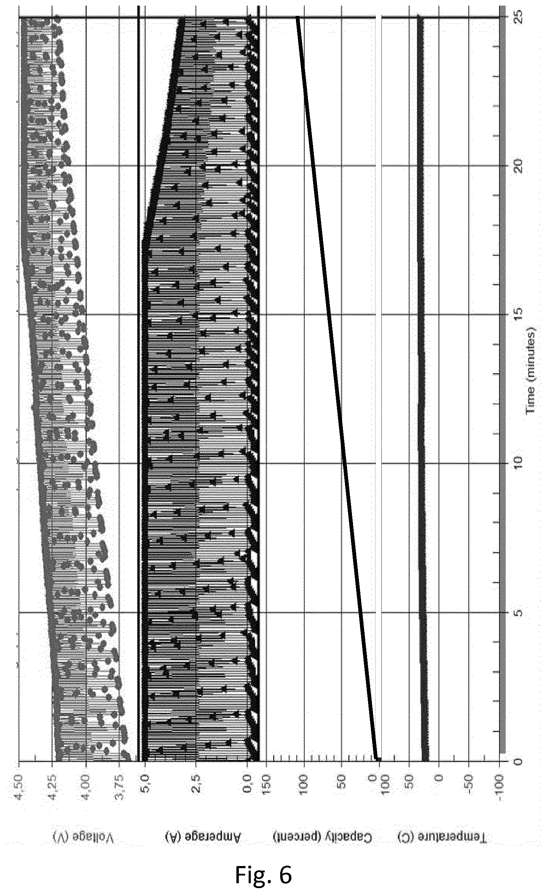

In Fig. 6 ist ein weiterer Signalverlauf des erfindungsgemäßen Ladeverfahrens dargestellt. Hier wird ein Ladeverfahren dargestellt, bei dem über 25 Minuten eine Ladung von 100% der Zelle erreicht wird. Ähnlich wie bei dem Ladeverfahren gemäß Fig. 5 ist erkennbar, dass die Spannung relativ schnell über die Ladeschlussspannung von 4,2V ansteigt, ohne dass dann eine Reduzierung des Stroms während der Ladepulse eingesetzt wird. Die Ladepulse werden erst nach ca. 17 Minuten reduziert, wenn die Spannung U_{Z} an der Zelle 4,5V erreicht hat. Nach Erreichen einer Spannung von 4,5V liegt in den Lastpulsen bereits eine Spannung von über 4V an der Zelle an. D.h. die Zelle ist nahezu vollständig geladen. Um einen weiteren Temperaturanstieg zu vermeiden, wird bei einer vorbestimmten Spannung von 4,5V begonnen, die Stromstärke während der Ladepulse zu reduzieren, wobei jedoch die Höhe der Lastpulse nicht verändert wird. Es ist deutlich zu erkennen, dass die Spannung U_{Z} während der Lastpulse weiter ansteigt und einen Wert von 4,2V erreicht, was der Ladeschlussspannung U_{Lmax} der Zelle entspricht. Auch bei diesem Signalverlauf ist zu erkennen, dass sich die Temperatur der Zelle kaum verändert und in jedem Fall nicht über 35°C ansteigt.

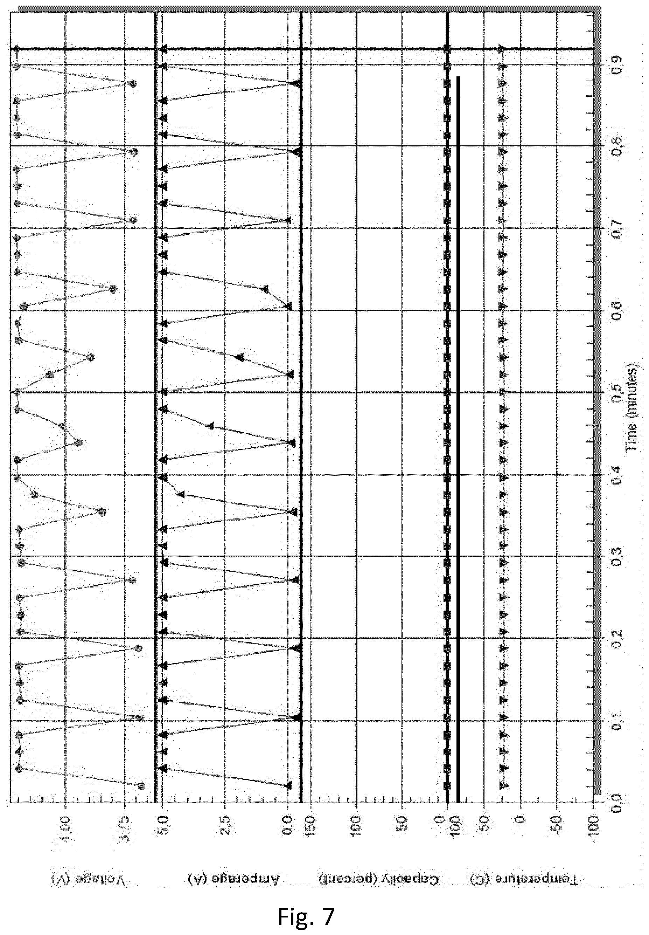

In Fig. 7 ist ein detaillierter Signalverlauf von Strom, Spannung, Kapazität und Temperatur während eines Ladeverfahrens dargestellt. Zu Beginn der Pulsladephase wird ein Ladepuls von 5A angelegt, was bei einer Hochenergiezelle etwas mehr als das Doppelte des I_{Lmax} entspricht. Die Spannung U_{Z} wird sowohl während der Lastpulse als auch während der Ladungspulse gemessen. Im ersten Ladepuls mit 5A wird an der Zelle eine Spannung U_{Z} von ca. 4,2V erreicht. Auf den ersten Ladepuls erfolgt ein erster Lastpuls mit weniger als 500mA, vorzugsweise 300mA, in dem die Zelle entladen wird. Der Strom der Lastpulse beträgt dabei ca. 3-6% des Stroms während der Ladepulse.

In der Darstellung gemäß Fig. 7 ist deutlich zu erkennen, dass die Höhe der Lastpulse variiert. Im mittleren Bereich der Darstellung ist zu erkennen, dass während eines Lastpulses die Spannung sprunghaft auf anfänglich 3,8V bzw. knapp unter 4V ansteigt. Diesem abrupten Spannungsanstieg wird entgegengewirkt, indem die folgenden Lastpulse in ihrer Stromstärke reduziert werden. Anfänglich wird mit einer Halbierung der Lastpulse von 300mA auf 150mA begonnen. Sollte die Spannung weiter ansteigen, ist es auch möglich, einen Lastpuls mit geringeren Stromstärken als 50mA anzulegen. Nachdem die Höhe der Lastpulse reduziert wurde, ist erkennbar, dass die Spannung U_{Z} während der Lastpulse wieder zu dem Spannungstrend zurückkehrt, so dass die Spannung während eines Lastpulses wieder im Bereich unter 3,75V liegt.

Mit der Darstellung gemäß Fig. 7 wird ein Zeitausschnitt eines Ladeverfahrens gemäß Fig. 5 oder 6 dargestellt, der jedoch nur etwa eine Minute darstellt. Folglich ist weder bei der Temperatur noch bei der Kapazität eine Veränderung zu erkennen.

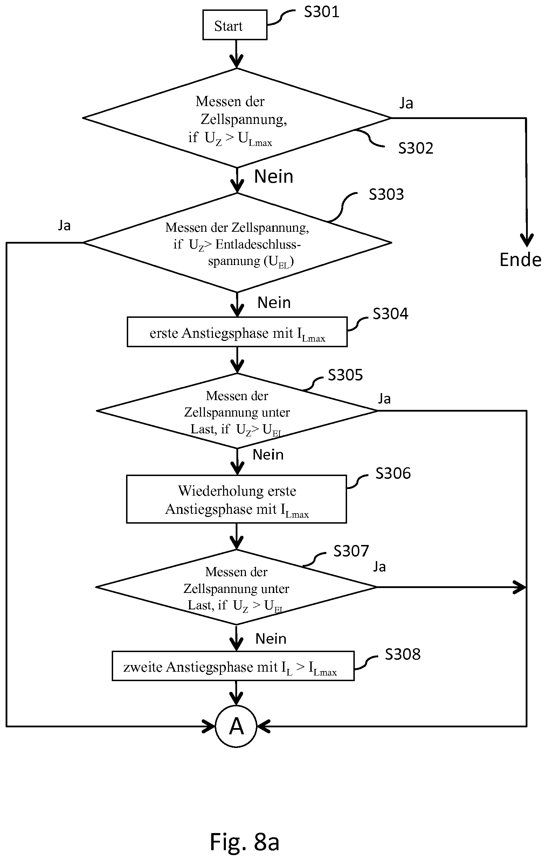

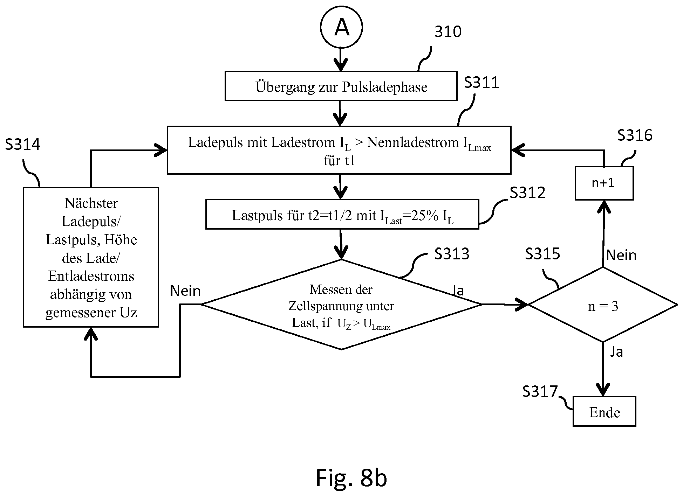

In den Fig. 8a und 8b ist ein Flussablaufdiagramm für ein erfindungsgemäßes Ladeverfahren dargestellt, bei dem sowohl eine Anladephase als auch eine Pulsladephase durchgeführt wird. Nachdem in Schritt S301 das Ladeverfahren begonnen wird, wird anfänglich die Spannung U_{Z} an der Zelle gemessen (S302). Wenn die Spannung U_{Z} größer als die Ladeschlussspannung U_{Lmax} ist, d.h. im Fall einer Hochenergiezelle größer als 4,2V an der Zelle anliegen, ist die Zelle vollständig geladen, so dass das Ladeverfahren beendet wird.

Ist die Zellspannung U_{Z} kleiner als die Ladeschlussspannung U_{Lmax} wird im Schritt S303 überprüft, ob die Zellspannung größer als eine Entladeschlussspannung U_{EL} ist. Die Entladeschlussspannung U_{EL} einer Hochenergiezelle liegt bei 3V, bei einer Hochstromzelle bei 2V. Liegt die Zellspannung U_{Z} über der Entladeschlussspannung U_{EL}, kann sofort mit dem Pulsladeverfahren gemäß Fig. 8b fortgefahren werden. Hat die Zelle jedoch eine Spannung U_{Z,}, die geringer als die Entladeschlussspannung U_{EL} ist, muss eine Anladephase zur Aktivierung der Zelle durchgeführt werden.

Somit erfolgt in Schritt S304 eine erste Anstiegsphase. Beispielsweise wird die Zelle hier über eine Minute linear ansteigend bis zu ihrem Nennladestrom I_{Lmax} geladen. Nachdem die Zelle während der ersten Anstiegsphase geladen wurde, wird die Zellspannung U_{Z} unter Last gemessen. Das heißt, es wird überprüft, wie hoch die Spannung U_{Z} an der Zelle im Lastfall ist. Ist die Spannung U_{Z} nun größer als die Entladeschlussspannung U_{EL} von 2V bzw. 3V, je nach verwendeter Zelle, kann mit der Pulsladephase begonnen werden. Andernfalls wird in den Schritten S306 bzw. S307 eine erste Anstiegsphase wiederholt, wobei auch die Spannungsmessung wiederholt wird. Sollte nach einer Wiederholung der ersten Anstiegsphase die Zellspannung weiter unter der Entladeschlussspannung U_{EL} liegen, wird eine zweite Anstiegsphase angewendet, bei der mit einem Ladestrom I_{L} von mehr als dem Nennladestrom I_{Lmax} gearbeitet wird (S308). Auch wenn es in Fig. 8a nicht dargestellt ist, wird nach Abschluss der zweiten Anstiegsphase überprüft, ob die Zellspannung U_{Z} die Entladeschlussspannung U_{EL} erreicht hat. Wenn die Zellspannung U_{Z} auch nach der zweiten Anstiegsphase die Entladeschlussspannung U_{EL} nicht erreicht hat, ist die Zelle defekt und kann nicht weiter geladen werden. Die Voraussetzung für die Pulsladephase, die in Fig. 8b dargestellt ist, ist das Erreichen der Entladeschlussspannung U_{EL}. Nachdem mit der Pulsladephase begonnen wurde, wird anfänglich ein Ladepuls für eine Zeitdauer t1 mit einem Ladestrom I_{L} angewendet, der größer als der Nennladestrom I_{Lmax} ist. Nach dem Ladepuls wird ein Lastpuls angelegt, der vorzugsweise nur halb so lang ist wie der Ladepuls und bei dem die Zelle mit einem Entladestrom I_{Last} von ca. 25% des Nennladestroms I_{Lmax} belastet wird. Während des Lastpulses wird die Zellspannung U_{Z} gemessen und überprüft, ob die Zellspannung Uz größer als die Ladeschlussspannung U_{Lmax} ist. Sollte die Spannung U_{Z} der Zelle bereits über der Ladeschlussspannung U_{Lmax} liegen, wird in den Schritten S315 und S316 bzw. S317 überprüft, ob die Ladeschlussspannung bereits dreimal erreicht wurde. Sollte dies der Fall sein, ist die Zelle vollständig geladen. Ist im Schritt S313 die Spannung U_{Z} an der Zelle kleiner als die Ladeschlussspannung, wird in Schritt S314 basierend auf der gemessenen Spannung U_{Z} während der Lastpulse die Höhe des nächsten Ladepulses bzw. Lastpulses eingestellt und mit den Schritten S311 bzw. S312 fortgefahren, wie es aus den Signalverläufen gemäß Fig. 5, 6 und 7 ersichtlich ist.

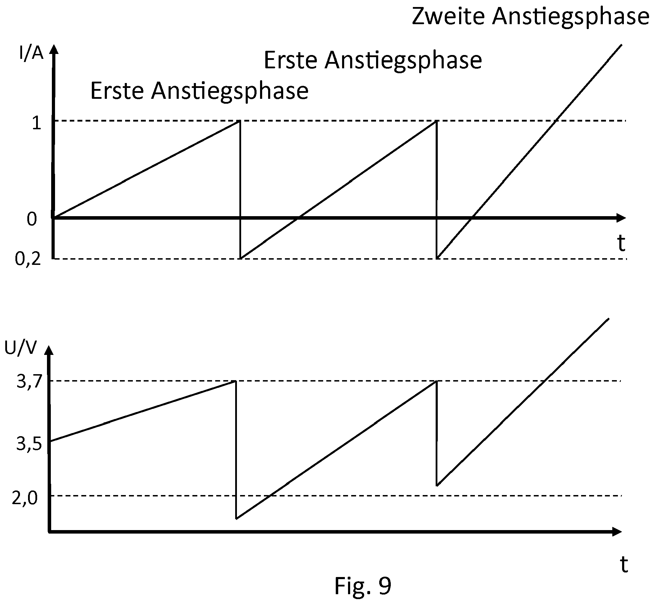

In Fig. 9 ist eine detaillierte Anladephase dargestellt. Im oberen Bereich der Fig. 9 ist erkennbar, dass die Zelle anfänglich mit einem linear ansteigenden Strom bis zu einer Stromstärke von 1A geladen wird, wobei während dieser Zeit die Spannung an der Zelle von ca. 3,5V auf 3,7V ansteigt. Während der nun folgenden Last wird wiederum eine Spannungsmessung vorgenommen. Nach der ersten Anstiegsphase ist erkennbar, dass die Spannung U_{Z} an der Zelle unter 2,0V liegt, was geringer als die Entladeschlussspannung U_{EL} bei einer Hochstromzelle ist, so dass eine weitere erste Anstiegsphase durchgeführt werden muss, da die Entladeschlussspannung U_{EL} Voraussetzung für den Beginn einer Pulsladephase ist. Nachdem die erste Anstiegsphase wiederholt wurde, wird erneut eine Spannungsmessung durchgeführt, die aufzeigt, dass die Zelle nach Abschluss der Wiederholung der ersten Anstiegsphase eine Spannung von 2,1V aufweist, was über der Entladeschlussspannung U_{EL} liegt. Nun kann je nach Ausführungsbeispiel eine zweite Anstiegsphase durchgeführt werden, bei der die Zelle bis auf eine Stromstärke oberhalb des Nennladestroms I_{Lmax} geladen wird. Alternativ ist es möglich, direkt zum Pulsladeverfahren überzugehen.

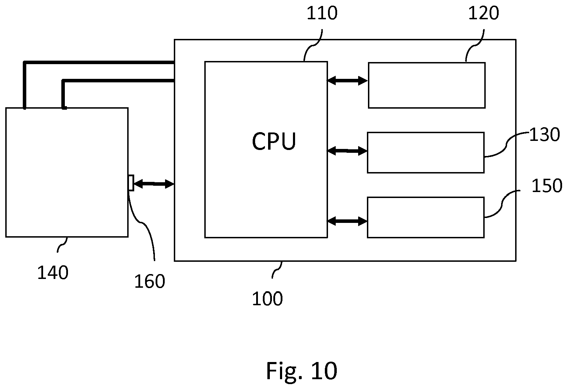

In Fig. 10 ist eine Vorrichtung zum Durchführen eines Ladeverfahrens beschrieben. Die Vorrichtung zur Durchführung des Ladeverfahrens wird üblicherweise auch als Ladegerät bezeichnet. Anders als bei herkömmlichen Ladegeräten ist ein Ladegerät zum Durchführen des Ladeverfahrens in der Lage, eine definierte Senke bzw. einen definierten Lastpuls an die Zelle anzulegen. Das Ladegerät 100 ist mit der Zelle 140 verbunden. Die Zelle 140 ist mit einem Temperatursensor 160 verbunden, der zur kontinuierlichen bzw. periodischen Temperaturüberwachung mit dem Ladegerät 100 gekoppelt ist. Das Ladegerät 100 weist eine CPU 110 auf, die das erfindungsgemäße Ladeverfahren durchführt. Die CPU 110 ist mit einem Speicher 120 verbunden und mit einem Display 130 zur Ausgabe von gemessenen Werten. Weiter verfügt das Ladegerät über eine Eingabeeinheit 150, über die das Ladeverfahren beeinflusst werden kann. Im Speicher 120 sind verschiedene Parameter für das Ladeverfahren abgelegt. So können beispielsweise die für eine bestimmte Zelle erforderlichen Kenndaten, wie Kapazität, Ladeschlussspannung, Nominalspannung, Entladeschlussspannung, maximaler Ladestrom, maximaler Entladestrom und Dauerentladestrom oder auch nur einige davon abgelegt sein. Basierend auf diesen Werten wird die Höhe der Ladepulse bzw. der Lastpulse berechnet. Ebenso können kritische Temperaturwerte im Speicher 120 abgelegt sein, bezogen auf die jeweilige Zelle. Das Ladegerät kann vorzugsweise mit einer Erkennungsvorrichtung versehen sein, um die zu ladende Zelle zu identifizieren.

Es ist ebenso möglich, dass der Typ der Zelle über die Eingabemittel 150 eingegeben wird. Die CPU 110 des Ladegeräts misst je nach Ladeverfahren in den Last- bzw. Ladepulsen die Spannung und/oder auch den Strom. Vorzugsweise weist das Ladegerät 100 wenigstens einen Kondensator auf, der zum Bereitstellen der Ladung für den Ladepuls verwendet wird. Ebenso ist es möglich, den wenigstens einen Kondensator zum Entladen während des Lastpulses einzusetzen, wobei die gespeicherte Ladung danach über einen Widerstand entladen wird.

## Patentansprüche

1. Verfahren zum Laden einer auf Lithium-Ionen basierten wiederaufladbaren Zelle, das Verfahren umfasst die Schritte:
- pulsförmiges Laden der Zelle (140), wobei der Ladestrom I_{L} während der Ladepulse (31, 41) einen maximal zugelassenen Ladestrom I_{Lmax} der Zelle (140) bis zum 5-Fachen übersteigt; und
- die Zelle (140) zwischen den Ladepulsen (31, 41) mittels Lastpulsen (32, 42) entladen wird, wobei die Lastpulse (32, 42) kürzer als die Ladepulse (31, 41) sind, **dadurch gekennzeichnet, dass**
- nach Erreichen einer vordefinierten Anzahl (n) von Lastpulsen (32, 42), bei denen die gemessene Spannung U_{Z} der Zelle der Ladeschlussspannung U_{Lmax} der Zelle entspricht, das Aufladen der Zelle beendet ist.

2. Verfahren nach Anspruch 1, wobei der Ladestrom I_{L} während der Ladepulse (31, 41) mehr als das 1,5 fache des maximal zugelassenen Ladestroms I_{Lmax} der Zelle (140) beträgt, vorzugsweise das 2-fache des maximal zugelassenen Ladestroms I_{Lmax} oder größer.

3. Verfahren nach Anspruch 1 oder 2, wobei die Ladespannung U_{L} während der Ladepulse (31, 41) höher als die Ladeschlussspannung U_{Lmax} ist.

4. Verfahren nach einem der Ansprüche 1-3, wobei die Höhe des Ladestroms I_{L} während der Ladepulse (31, 41) und/oder die Höhe der Lastpulse (32, 42) abhängig vom Zustand der Zelle (140) ist.

5. Verfahren nach Anspruch 4, wobei die Höhe des Stroms während der Ladepulse (31, 41) und/oder der Lastpulse (32, 42) abhängig vom Innenwiderstand der Zelle (140) und/oder der Temperatur der Zelle eingestellt werden.

6. Verfahren nach einem der Ansprüche 1-5, wobei während eines Lastpulses (32, 42) ein Entladestrom I_{Last} von maximal 20 - 25 % des zugelassenen Ladestroms I_{Lmax} fließt.

7. Verfahren nach einem der Ansprüche 1-6, wobei die Höhe des Ladestroms I_{L} in aufeinanderfolgenden Ladepulsen (31, 41) verschieden ist und/oder die Höhe des Entladestroms I_{Last} in aufeinanderfolgenden Lastpulsen (32, 42) verschieden ist.

8. Verfahren nach Anspruch 1, wobei bei Überschreiten einer vorbestimmten Spannung der Zelle (140), der Ladevorgang beendet wird und/oder wobei bei Überschreiten einer vorbestimmten Temperatur (Tₘₐₓ) der Zelle, der Ladevorgang beendet wird.

9. Verfahren nach einem der Ansprüche 1-8, wobei in Abhängigkeit der Spannungsmessung die Höhe des Ladestroms I_{L} für den darauf folgenden Ladepuls (31, 41) eingestellt wird, wobei wenn die Spannung U_{Z} der Zelle während des Lastpulses (32, 42) über einem vordefiniertem Wert liegt, der Ladestrom I_{L} im nächsten Ladepuls reduziert wird.

10. Verfahren nach einem der Ansprüche 1-9, wobei in Abhängigkeit der Spannungsmessung, die Höhe des Entladestroms I_{Last} für den darauf folgenden Lastpuls (32, 42) eingestellt wird, wobei wenn die Spannung U_{Z} der Zelle während des Lastpulses (32, 42) über einem vordefiniertem Wert liegt, der Entladestrom I_{Last} im nächsten Lastpuls (32, 42) reduziert wird.

11. Verfahren nach einem der Ansprüche 1-10, bei dem die Länge eines Lastpulses (32, 42) ca. ½ der Länge eines Ladepulses (31, 41) entspricht.

12. Verfahren nach einem der Ansprüche 1-11, wobei wenn die Spannung U_{Z} während des Lastpulses (32, 42) die Ladeschlussspannung U_{Lmax} erreicht hat, der Ladestrom I_{L} im nächsten Ladepuls (31, 41) verkleinert wird.

13. Vorrichtung zum Laden einer auf Lithium-Ionen basierten wiederaufladbaren Zelle, umfassend:
- einen Controller (110) der eingerichtet ist, das Verfahren nach einem der Ansprüche 1-12 auszuführen.

14. Vorrichtung nach Anspruch 13, weiter umfassend:
- eine Vorrichtung zur Bereitstellung einer Senke, um die Zelle während der Lastpulse (32, 42) zu entladen, wobei die Größe des Lastpulses (32, 42) einstellbar ist

15. Vorrichtung nach einem der Ansprüche 13 oder 14, weiter umfassend:
- wenigstens einen Kondensator, der zur Bereitstellung des Lastpulses (32, 42) und/oder Ladepulses (31, 41) verwendet wird.

## Claims

1. Method for charging a rechargeable lithium-ion-based cell, comprising the steps:
- pulsed-mode charging of the cell (140), wherein the charging current I_{L} during the charging pulses (31, 41) exceeds a maximum permissible charging current I_{Lmax} of the cell (140) by up to a factor of 5; and
- the cell (140) is discharged between the charging pulses (31, 41) by means of load pulses (32, 42), wherein the load pulses (32, 42) are shorter than the charging pulses (31, 41),
**characterized in that**
after a predefined number (n) of load pulses (32, 42) has been reached, at which the measured voltage U_{Z} of the cell corresponds to the end-of-charge voltage U_{Lmax} of the cell, the charging of the cell is terminated.

2. Method according to Claim 1,
wherein the charging current I_{L} during the charging pulses (31, 41) is equal to more than 1.5 times the maximum permissible charging current I_{Lmax} of the cell (140), preferably double the maximum permissible charging current I_{Lmax} or greater.

3. Method according to Claim 1 or 2,
wherein the charging voltage U_{L} during the charging pulses (31, 41) is higher than the end-of-charge voltage U_{Lmax}.

4. Method according to any one of Claims 1 to 3,
wherein the amplitude of the charging current I_{L} during the charging pulses (31, 41) and/or the amplitude of the load pulses (32, 42) is dependent on the state of the cell (140).

5. Method according to Claim 4,
wherein the amplitude of the current during the charging pulses (31, 41) and/or the load pulses (32, 42) are set according to the internal resistance of the cell (140) and/or the temperature of the cell.

6. Method according to any one of Claims 1 to 5,
wherein during a load pulse (32, 42) a discharge current I_{Last} of a maximum of 20 - 25% of the permissible charging current I_{Lmax} flows.

7. Method according to any one of Claims 1 to 6,
wherein the amplitude of the charging current I_{L} in consecutive charging pulses (31, 41) is different and/or the amplitude of the discharge current I_{Last} in consecutive load pulses (32, 42) is different.

8. Method according to Claim 1,
wherein if a predefined voltage of the cell (140) is exceeded, the charging process is terminated and/or wherein a predefined temperature (Tₘₐₓ) of the cell, the charging process is terminated.

9. Method according to any one of Claims 1 to 8,
wherein the amplitude of the charging current I_{L} for the following charging pulse (31, 41) is set depending on the voltage measurement, wherein if the voltage U_{Z} of the cell during the load pulse (32, 42) is above a predefined value, the charging current I_{L} is reduced in the next charging pulse.

10. Method according to any one of Claims 1 to 9,
wherein the amplitude of the discharge current I_{Last} for the following load pulse (32, 42) is set depending on the voltage measurement, wherein if the voltage U_{Z} of the cell during the load pulse (32, 42) is above a predefined value, the discharge current I_{L} is reduced in the next charging pulse (32, 42).

11. Method according to any one of Claims 1 to 10,
in which the length of a load pulse (32, 42) is approximately half the length of a charging pules (31, 41).

12. Method according to any one of Claims 1 to 11,
wherein if the voltage U_{Z} of the cell during the load pulse (32, 42) has reached the end-of-charge voltage U_{Lmax}, the charging current I_{L} is reduced in the next charging pulse(31, 41).

13. Device for charging a rechargeable lithium-ion-based cell, comprising:
- a controller (110) which is configured to execute the method according to any one of the Claims 1 - 12.

14. Device according to Claim 13, further comprising:
- a device for providing a sink in order to discharge the cell during the load pulses (32, 42), wherein the size of the load pulse (32, 42) is adjustable.

15. Device according to any one of Claims 13 or 14, further comprising:
- at least one capacitor, which is used to provide the charging pulse (32, 42) and/or charge pulse (31, 41).

## Revendications

1. Procédé pour la charge d'un élément de batterie rechargeable à base de lithium-ions, le procédé comprenant les étapes suivantes :
- la charge sous forme d'impulsions de l'élément de batterie (140), dans lequel le courant de charge I_{L} pendant les impulsions de charge (31, 41) dépasse un courant de charge admissible au maximum I_{Lmax} de l'élément de batterie (140) jusqu'à plus de 5 fois ; et
- entre les impulsions de charge (31, 41), l'élément de batterie (140) est déchargé au moyen d'impulsions de dissipation de charge (32, 42), dans lequel les impulsions de dissipation de charge (32, 42) sont plus courtes que les impulsions de charge (31, 41),
**caractérisé en ce que**,
- après avoir atteint un nombre prédéfini (n) d'impulsions de dissipation de charge (32, 42) où la tension mesurée U_{Z} de l'élément de batterie correspond à la tension de fin de charge U_{Lmax} de l'élément de batterie, la charge de la batterie est terminée.

2. Procédé selon la revendication 1, dans lequel le courant de charge I_{L} pendant les impulsions de charge (31, 41) est de plus de 1,5 fois le courant de charge admissible au maximum I_{Lmax} de l'élément de batterie (140), de préférence de 2 fois le courant de charge admissible au maximum I_{Lmax} ou plus.

3. Procédé selon la revendication 1 ou 2, dans lequel la tension de charge U_{L} pendant les impulsions de charge (31, 41) est plus élevée que la tension de fin de charge U_{Lmax}.

4. Procédé selon l'une des revendications 1-3, dans lequel le niveau du courant de charge I_{L} pendant les impulsions de charge (31, 41) et/ou le niveau des impulsions de dissipation de charge (32, 42) est réglé en fonction de l'état de l'élément de batterie (140).

5. Procédé selon la revendication 4, dans lequel le niveau du courant pendant les impulsions de charge (31, 41) et/ou des impulsions de dissipation de charge (32, 42) sont réglés indépendamment de la résistance intérieure de l'élément de batterie (140) et/ou de la température de l'élément de batterie.

6. Procédé selon l'une des revendications 1-5, dans lequel, pendant une impulsion de dissipation de charge (32, 42), un courant de décharge I_{Last} d'un maximum de 20-25% du courant de charge admissible I_{Lmax} circule.

7. Procédé selon l'une des revendications 1-6, dans lequel le niveau du courant de charge I_{L} dans des impulsions de charge (31, 41) successives est différent et/ou le niveau du courant de décharge I_{Last} dans des impulsions de dissipation de charge (32, 42) successives est différent.

8. Procédé selon la revendication 1, dans lequel, en cas de dépassement par le haut d'une tension prédéfinie de l'élément de batterie (140), le processus de charge est terminé et/ou dans lequel, en cas de dépassement par le haut d'une température prédéfinie (Tₘₐₓ) de l'élément de batterie, le processus de charge est terminé.

9. Procédé selon l'une des revendications 1-8, dans lequel, en fonction de la mesure de la tension, le niveau du courant de charge I_{L} pour l'impulsion de charge (31, 41) qui suit est réglé, dans lequel, lorsque la tension U_{Z} de l'élément de batterie pendant l'impulsion de dissipation de charge (32, 42) se situe au-dessus d'une valeur prédéfinie, le courant de charge I_{L} dans l'impulsion de charge suivante est réduit.

10. Procédé selon l'une des revendications 1-9, dans lequel, en fonction de la mesure de la tension, le niveau du courant de décharge I_{Last} pour l'impulsion de dissipation de charge (32, 42) qui suit est réglé, dans lequel, lorsque la tension U_{Z} de l'élément de batterie pendant l'impulsion de dissipation de charge (32, 42) se situe au-dessus d'une valeur prédéfinie, le courant de décharge I_{Last} dans l'impulsion de dissipation de charge (32, 42) suivante est réduit.

11. Procédé selon l'une des revendications 1-10, dans lequel la longueur d'une impulsion de dissipation de charge (32, 42) correspond à environ ½ de la longueur d'une impulsion de charge (31, 41).

12. Procédé selon l'une des revendications 1-11, dans lequel, lorsque la tension U_{Z} pendant l'impulsion de dissipation de charge (32, 42) a atteint la tension de fin de charge U_{Lmax}, le courant de charge I_{L} dans l'impulsion de charge (31, 41) suivante est réduit.

13. Dispositif pour la charge d'un élément de batterie rechargeable à base de lithium-ions, comprenant :
- un contrôleur (110) étudié pour mettre en oeuvre le procédé selon l'une des revendications 1-12.

14. Dispositif selon la revendication 13, comprenant en outre :
- un dispositif pour la mise à disposition d'une source négative pour décharger l'élément de batterie pendant les impulsions de dissipation de charge (32, 42), dans lequel la taille des impulsions de dissipation de charge (32, 42) est réglable.

15. Dispositif selon l'une des revendications 13 ou 14, comprenant en outre :
- au moins un condensateur, lequel est utilisé pour la mise à disposition de l'impulsion de dissipation de charge (32, 42) et/ou de l'impulsion de charge (31, 41).
